# EUROPEAN PATENT APPLICATION

(11) **EP 1 051 916 A1**
(43) Date of publication of application: **15.11.2000**
(21) Application number: 99109563.9
(22) Date of filing: 14.05.1999
(51) Int. Cl.: A23L 1/10, A23L 1/36, A23P 1/02

(54) **Tablets comprising millet and groundnut**

(71) Applicant: Société des Produits Nestlé S.A., 1800 Vevey (CH)
(72) Inventor: Jegede, Oyelayo, New Milford, CT 06776 (US)
(74) Representative: Micheli & Cie

(57) **Abstract**

The invention relates to a cereal based product for human nutrition comprising a homogeneous mixture of non fermented granulated millet, groundnut paste and sugar, this mixture being in the form of a compacted tablet; it may comprise a fat product and a starchy product, as well as optionally other ingredients such as flavours, aromas and/or a colorant.

## Description

The present invention relates to a new cereal-based product for human nutrition including millet couscous.

Traditionally across West Africa, snacks are sweetened mixtures of cereal (grilled, puffed, toasted or milled) and oilseed grains (toasted and milled) which are consumed in powder form. Mbouraké is known for example in Senegal as a powdery mixture of dry non fermented millet couscous and groundnut paste (milled roast groundnut), which is normally prepared just before use and eaten with a spoon in a powdery form. Similar products are known by other names across the sub African continent, for example as Bassi in Ivory Coast.

The purpose of the present invention is to provide a ready-to-eat product which can be manufactured on an industrial level and which can be stored.

Therefore, the object of this invention which is leading to reach the above purpose is constituted by a cereal-based product for human nutrition comprising a homogenous mixture of non fermented granulated millet, groundnut paste and sugar, this mixture being in the form of a compacted tablet.

According to a preferred embodiment of the present invention, the product may further comprise a fat product and a starchy product, as well as optional ingredients such as flavours (peanut, etc), aromas (honey, vanilla, chocolate, banana, hazelnut, blackcurrant, raspberry, toffee, etc) preferably at about 0.2 to 0.4%, and/or a colorant.

As example of starchy products which can be used, one may mention maltodextrine, potatoes flakes or preferably cassava flakes. The fat product can be a high melting point oil, such as a stearine fat, and for example palm oil (MP = 52-56°C) or an oil known as C6^{®}

The dry non fermented granulated millet (or millet couscous) as used in this invention can be obtained by cleaning and destoning the millet grains, dehulling and grinding them into flour, agglomerating said flour, steam-cooking and drying the granules obtained. The finished product is greyish-green in colour and the particles size thereof is usually between about 300 and 500 µm with a moisture content between about 9-10%.

The groundnut fruit is recognised especially in Africa as a major oilseed crop, grown primarily for its high oil content, and used in form of confectioneries such as roasted or salted nuts, and as a sauce ingredient.

With regards to the groundnut paste used in this invention, it corresponds in fact to roast groundnut seed ground to a smooth paste, and is comparable to the "peanut butter" but without additional ingredients.

Sugar can be used in the form of crystal sugar with mean particle size of more than 500 µm (about 600µm) or of icing sugar with mean particle size of less than 100 µm (about 75µm).

Several attempts have been carried out in order to find the best possible conditions, compositions and parameters for compacting the mixture of appropriate ingredients into easy to handle and storable cereal snack bars or tablets.

The compacting operation was carried out either with a static testing instrument known as Adamel® press (at 5000 to 14000 N), this especially for the first tests on a relatively limited scale, and with an industrial rotary press, for example that known as Fette® press (at about 10000N), which is normally used for the manufacture of compacted bouillon tablets. The Adamel® press was also used to determine the crushing strength (hardness) of the tablets obtained, which is an essential element as to the tablet quality.

It has been found that for a tablet thickness of 10 to 13 mm, the hardness should be of at least about 70N, but preferably higher than about 150N. Of course, the hardness is depending on the composition of the mixture and of the particle size of its ingredients.

More particularly, it has been shown that, for example,
- icing sugar provides an increase of about 30N in hardness and of 0,5mm in thickness than crystal sugar;
- 1 % of groundnut paste replaced by 1 % of sugar gives an increase of about 1 N, but it also appeared that groundnut paste should preferably not be higher than 10%, since at higher levels the mixing process of the composition is made more difficult and the tablets obtained are too oily, less hard and thus more fragile;
- an increase of about 1 % fat reduced thickness by about 0.12mm;
- no significant results on the influence of different millet granule particle size; however, large particle size (about 500 µm) gave harder tablets than small particle size (about 300 µm);
- with replacement of maltodextrine by cassava flakes, there is a higher need for water addition (up to about 2%) to make starch available for cohesion; however, higher cassava flakes levels(above 15%) reduced tablet hardness and increased friability and thickness;
- in order to reduce the thickness and increase cohesion within the ingredients, liquid ingredients (water and/or fat) must be added to release recipe starch and dissolve other ingredients; however, caution must be taken in the water addition due to product shelf life concerns; furthermore, levels of fat lower than about 5% give lack of cohesion in the tablets, etc.

More particularly, the composition of the mixture can be as follows :

| | |
|---|---|
| Granulated millet | 25 - 60 wt % (preferably higher than 30%) |
| Groundnut paste | 5 - 30 wt % (preferably not higher than 10%) |
| Sugar | 20 - 40 wt % (preferably at least 30%) |
| Fat product | 0 - 15 wt % (preferably about 5%) |
| Starchy product | 0 - 20 wt % |

One preferred composition of the mixture can be the following one :

| | |
|---|---|
| Millet couscous | 32 wt % |
| Groundnut paste | 10 wt % |
| Icing sugar | 33 wt % |
| Fat | 10wt% |
| Cassava flakes | 10 wt % |
| Water | 5 wt % |

### - Preparation of the mixtures to be compacted

The groundnut paste and icing sugar are mixed for 1.5 min., optionally together with colour powder and/or flavour; then, millet couscous is added and mixed for 30sec., water and fat are added and mixed for 3 min. and finally cassava flakes are added and mixed for 1 min. The following recipes which have been prepared are described above. Mixing operations have been carried out in a vertical Hobart® mixer.

### - Examples 1 and 2

| | Ex. 1 (%) | Ex. 2 (%) |
|---|---|---|
| Groundnut paste | 10 | 10 |
| Icing sugar | 33 | 33 |
| Millet couscous | 35 | 38 |
| Water | 4 | 2 |
| Fat | 8 | 12 |
| Cassava flakes | 10 | 5 |

### - Examples 3 and 4

| | Ex. 3 (%) | Ex. 4 (%) |
|---|---|---|
| Groundnut paste | 10 | 10 |
| Icing sugar | 30 | 32 |
| Caramel colour powder | 3 | 0,5 |
| Peanut flavour (Firmenich 7M.004) | 0,5 | 0,5 |
| Millet couscous | 34,5 | 35 |
| Water | 4 | 4 |
| Fat | 8 | 8 |
| Cassava flakes | 10 | 10 |

The above mixture (9g of each) compositions have been compacted on a Adamel® press, and the following results (Table 1 ) have been obtained for the respective thickness and hardness of the tablets obtained (with 5000 and 14000 N respectively as the compression force applied).

**Table 1**

| | Thickness (mm) | | Hardness (N) | |
|---|---|---|---|---|
| | 5000N | 14000N | 5000N | 14000N |
| Ex. 1 | 12.06 | 10.93 | 35.6 | 97.5 |
| Ex. 2 | 10.67 | 10.34 | 59.7 | 71.3 |
| Ex. 3 | 12.03 | 10.48 | 50 | 132 |
| Ex. 4 | 11.59 | 10.30 | 43 | 189 |

On a rotary press Fette®, the tablets obtained after compacting have the following characteristics:

**Table 2**

| | Ex. 1 | Ex. 2 |
|---|---|---|
| Mean tablet weight (g) | 9.03 | 8.94 |
| Mean tablet thickness (mm) | 10.48 | 9.90 |
| Mean tablet hardness (N) | 78.8 | 61.0 |
| (for a mean compressive force -N) | 2622.3 | 979.8 |

The Mbourake'-type compacted tablets thus obtained can be advantageously packed, so as to be available on the market in the form of a storable snack product.

The packaging operations can be carried out using for example the standard bouillon wrapping method or the flow pack process, this latter being more appropriate for thicker tablets.

## Claims

1. Cereal based product for human nutrition comprising a homogeneous mixture of non fermented granulated millet, groundnut paste and sugar, this mixture being in the form of a compacted tablet.

2. Cereal-based product, characterized in that it further comprises a fat product and a starchy product, as well as optionally other ingredients such as flavours, aromas and/or a colorant.

3. Cereal-based product, characterized in that it contains 0.2 to 0.4 wt % of flavours, such as peanut, and aromas such as honey, vanilla, chocolate, banana, hazelnut, blackcurrant, raspberry or toffee.

4. Cereal-based product according to claim 2, characterized in that the fat product is a high melting point oil and the starchy product is maltodextrine, potatoes flakes or cassava flakes.

5. Cereal-based product according to one of claims 1 to 4, characterized in that the particle size of the granulated millet flour is from 300 to 500 µm and that of the sugar is from 50 to 600 µm.

6. Cereal-based product according to one of claims 1 to 5, characterized in that the composition of the mixture is the following :
| | |
|---|---|
| Granulated millet flour | 25 -- 60 wt % |
| Groundnut paste | 5 - 30 wt % |
| Sugar | 20 - 40 wt % |
| Fat product | 0 - 15 wt % |
| Starchy product | 0 - 20 wt % |

7. Cereal-based product according to claim 6, characterized in that the composition of the mixture is the following :
| | |
|---|---|
| Granulated millet flour | 35 - 38 wt % |
| Groundnut paste | 10 wt % |
| Icing sugar | 33 wt % |
| Fat product | 8-12wt% |
| Cassava flakes | 5 - 10 wt % |
| Water | 2 - 4 wt % |

8. Cereal-based product according to claim 6, characterized in that the composition of the mixture is the following :
| | |
|---|---|
| Granulated millet flour | 34,5 - 35 wt % |
| Groundnut paste | 10 wt % |
| Icing sugar | 30 - 32 wt % |
| Fat product | 8 wt % |
| Cassara flakes | 10 wt % |
| Water | 4 wt % |
| Peanut flavour | 0.5 wt % |
| Caramel colour powder | 0.5 - 3 wt % |
